# EUROPÄISCHE PATENTANMELDUNG

(11) **EP 2 907 603 A2**
(43) Veröffentlichungstag der Anmeldung: **19.08.2015**
(21) Anmeldenummer: 15154842.7
(22) Anmeldetag: 12.02.2015
(51) Int. Cl.: B22F 3/105, B21D 39/03, B21D 49/00, B22F 7/08, B62D 25/00

(54) **Metallblech mit lokaler metallischer Verstärkung und Verfahren zu dessen Herstellung**

(30) Priorität: 14.02.2014 DE 102014101907
(71) Anmelder: ThyssenKrupp Steel Europe AG, 47166 Duisburg (DE); ThyssenKrupp AG, 45143 Essen (DE)
(72) Erfinder: Cott, Andreas, 99880 Waltershausen (DE); Fechte-Heinen, Rainer, 46238 Bottrop (DE); Patberg, Lothar, 47445 Moers (DE); Rauhut, Marcus, 45468 Mülheim a.d. Ruhr (DE)
(74) Vertreter: ThyssenKrupp AG - IP Services

(57) **Zusammenfassung**

Die Erfindung betrifft Metallblech mit einer ersten Seite und einer der ersten Seite abgewandten zweiten Seite, wobei mindestens eine der beiden Seiten mit mindestens einer lokalen metallischen Verstärkung versehen ist. Ferner betrifft die Erfindung ein Verfahren zur Herstellung eines lokal verstärkten Metallblechs, welches eine erste Seite und eine der ersten Seite abgewandte zweite Seite besitzt, bei dem mindestens eine der beiden Seiten mit mindestens einer lokalen metallischen Verstärkung versehen wird. Der Erfindung lag die Aufgabe zugrunde, gewichtsreduzierter, belastungsgerecht ausgelegter Metallbleche bzw. Bauteile aus Metallblech, die einen hohen Komplexitätsgrad und/oder mindestens eine integrierte Zusatzfunktion aufweisen, sowie ein Verfahren zu deren effizienter Herstellung anzugeben.

## Beschreibung

Die Erfindung betrifft ein Metallblech mit einer ersten Seite und einer der ersten Seite abgewandten zweiten Seite, wobei mindestens eine der beiden Seiten mit mindestens einer lokalen metallischen Verstärkung versehen ist.

Des Weiteren betrifft die Erfindung ein Verfahren zur Herstellung eines lokal verstärkten Metallblechs, welches eine erste Seite und eine der ersten Seite abgewandte zweite Seite besitzt, bei dem mindestens eine der beiden Seiten mit mindestens einer lokalen metallischen Verstärkung versehen wird.

Beim Einsatz von Bauteilen aus Metall, insbesondere im Kraftfahrzeugbau, wird bei belastungsgerechter Auslegung zunehmend großer Wert auf ein geringes Bauteilgewicht gelegt. Insbesondere Bauteile von Fahrzeugkarosserien, welche im Stand der Technik aus Metallblechen mit einheitlicher Blechstärke oder aus sogenannten "Tailored Blanks" gefertigt werden, unterliegen lokal unterschiedlichen Belastungen.

Die Fertigung solcher Bauteile aus Blechen mit einheitlicher Blechdicke erfordert eine Auslegung entsprechend des am stärksten belasteten Bereichs im Bauteil und hat somit eine Überdimensionierung der anderen Bereiche des Bauteils zur Folge.

Bei Tailored Blanks handelt es sich um maßgeschneiderte Blechplatinen, die aus miteinander verschweißten Platinenzuschnitten unterschiedlicher Blechdicke, Werkstoffgüte und/oder Oberflächenbeschaffenheit zusammengesetzt sind. Die Fertigung von Karosseriebauteilen aus Tailored Blanks ermöglicht eine bessere Anpassung des Bauteils an zu erwartende Belastungen und reduziert den Grad der Überdimensionierung. Eine wesentliche Grenze für den wirtschaftlichen Einsatz von Tailored Blanks ist allerdings die Feinheit der Anpassung an lokal unterschiedliche Belastungsgrade. Der hohe Aufwand für den Zuschnitt und das Aneinanderfügen einzelner Platinen reduziert die Wirtschaftlichkeit mit steigender Zahl unterschiedlicher Platinen pro Tailored Blank erheblich. Insbesondere die Anpassung an mehrere Lastspitzen, die an von einander beabstandeten Stellen auf das Bauteil einwirken, und das exakte Einstellen mehrerer unterschiedlicher Blechstärken stoßen an die Grenzen der wirtschaftlichen Sinnhaftigkeit und der Machbarkeit von Tailored Blanks.

Aus der DE 100 49 660 A1 ist ein Verfahren zum Herstellen lokal verstärkter Blechumformteile bekannt, bei dem ein Basisblech im Flachzustand mit einem Verstärkungsblech lagedefiniert verbunden und das so erzeugte Verbundblech anschließend umgeformt wird. Auch dieses Verfahren ist vergleichsweise aufwendig. Insbesondere ist es hinsichtlich der Feinheit der Anpassung des Blechbauteils an lokal unterschiedliche Belastungsgrade und der Reduzierung des Bauteilgewichts nicht zufriedenstellend.

Davon ausgehend lag der vorliegenden Erfindung die Aufgabe zugrunde, Metallbleche der eingangs genannten Art zu schaffen, die sich bei belastungsgerechter Auslegung durch ein geringes Gewicht sowie günstige Herstellungskosten auszeichnen. Auch sollen entsprechende Metallbleche bzw. Blechbauteile geschaffen werden, die zu günstigen Kosten eine oder mehrere integrierte Zusatzfunktionen bieten. Insbesondere lag der Erfindung die Aufgabe zugrunde, ein Verfahren zur effizienten Herstellung gewichtsreduzierter, belastungsgerecht ausgelegter Metallbleche bzw. Bauteile aus Metallblech, die einen hohen Komplexitätsgrad und/oder mindestens eine integrierte Zusatzfunktion aufweisen, anzugeben.

Diese Aufgabe wird durch ein Metallblech mit den Merkmalen des Anspruchs 1 sowie durch ein Verfahren mit den Merkmalen des Anspruchs 10 gelöst. Bevorzugte und vorteilhafte Ausgestaltungen des erfindungsgemäßen Metallblechs bzw. Verfahrens sind in den Unteransprüchen angegebenen.

Das erfindungsgemäße Metallblech, das auf mindestens einer seiner er beiden Seiten mit mindestens einer lokalen metallischen Verstärkung versehen ist, ist dadurch gekennzeichnet, dass die lokale Verstärkung eine durch selektives Schmelzen von auf dem Metallblech aufgebrachtem Metallpulver und/oder durch Auftragsschweißen von draht- oder pulverförmigem Zusatzwerkstoff hergestellte metallische Verstärkung ist.

Das erfindungsgemäße Verfahren ist dementsprechend dadurch gekennzeichnet, dass die Verstärkung durch selektives Schmelzen von auf dem Metallblech aufgebrachtem Metallpulver und/oder durch Auftragsschweißen von draht- oder pulverförmigem Zusatzwerkstoff hergestellt wird.

Das Metallblech (Grundblech) ist im Ausgangszustand ein Flachprodukt mit im Wesentlichen einheitlicher Blechdicke.

Der auf das Metallblech (Grundmaterial) aufgebrachte Werkstoff, d.h. das Metallpulver bzw. der draht- oder pulverförmiger Zusatzwerkstoff, geht beim selektiven Schmelzen bzw. Auftragsschweißen eine stoffschlüssige Verbindung mit dem Metallblech ein.

Unter einer lokalen Verstärkung des Metallblechs wird hier insbesondere auch eine Versteifung desselben verstanden. Die lokale Verstärkung kann gegebenenfalls auch eine Zusatzfunktion übernehmen, beispielsweise als Ablaufkanal oder als Formschlusselement zur Anbindung einer Verkleidung oder eines elektrischen oder elektronischen Aggregats dienen.

Die lokale Verstärkung wird nachfolgend insbesondere auch als additiver lokaler Auftrag oder Anformung bezeichnet.

Die Erfindung basiert auf der Idee, die hohe Produktivität von blechbezogenen Umformtechnologien und die geometrischen Freiheitsgrade, die additive Fertigungsverfahren bezüglich der Herstellung komplexer Bauteile bieten, effizient miteinander zu kombinieren.

Das erfindungsgemäße Verfahren umfasst somit zunächst den Schritt, dass ein Metallblech, vorzugsweise Stahlblech bereitgestellt wird, das eine im Wesentlichen einheitliche Blechdicke aufweist. Das Metallblech kann in Form eines Bandes, einer Blechtafel oder Platine, insbesondere einer beschnittenen Platine mit asymmetrischer Form, bereitgestellt werden. Das bandförmige Metallblech wird vorzugsweise als Coil bereitgestellt, das für den nachfolgenden Fertigungsprozess abgewickelt wird.

Auf mindestens eine der beiden Flachseiten des bereitgestellten Metallblechs wird lokal metallisches Material additiv aufgetragen. Das additive Auftragen erfolgt durch selektives Schmelzen von auf dem Metallblech aufgebrachtem Metallpulver und/oder durch Auftragsschweißen von draht- oder pulverförmigem Zusatzwerkstoff.

Das Auftragsschweißen und/oder selektive Schmelzen von Metallpulver wird vorzugsweise mittels eines oder mehrerer Laserschweißköpfe durchgeführt.

Das Herstellen eines lokalen additiven Auftrages durch selektives Schmelzen bzw. selektives Laserschmelzen von metallischem Pulver erfolgt typischerweise diskontinuierlich. Hierzu wird ein Metallband in einzelne Platinen (Blechtafeln) abgelängt. Optional wird die jeweilige Platine zugeschnitten, beispielsweise in eine Vorform eines noch umzuformenden Blechs für ein Karosserieteil. Die (gegebenenfalls zugeschnittene) Platine wird dann als Grundblech in einen Bauraum einer Vorrichtung zum selektiven Schmelzen, vorzugsweise Laserschmelzen gelegt. Anschließend wird auf die eingelegte Platine eine metallische Pulverschicht aufgebracht. Das aufgebrachte Metallpulver liegt in loser Pulverform vor. Danach wird ein bestimmter Teil des aufgebrachten Metallpulvers durch selektives Schmelzen mit der Platine (Grundblech) verschweißt. Im Anschluss daran wird bei Bedarf eine weitere metallische Pulverschicht aufgetragen und danach wiederum ein bestimmter Teil des aufgebrachten Metallpulvers durch selektives Schmelzen mit dem zuvor verschweißten metallischem Material verschweißt. Das schichtweise Aufbringen von metallischem Pulver und das nachfolgende lokale Schmelzen des aufgebrachten Pulvers, so dass jeweils nur ein ausgewählter Schichtbereich, beispielsweise ein spurförmiger Bereich verfestigt wird, kann mehrmals wiederholt werden. Überschüssiges, nicht verschweißtes Pulver wird anschließend entfernt, beispielsweise durch Absaugen, und wird vorzugsweise bei der Herstellung eines oder mehrerer weiterer erfindungsgemäß verstärkter Platinen verwendet.

Entsprechend dem jeweiligen Verwendungszweck können durch das selektive Schmelzen von aufgebrachtem metallischem Pulver und/oder das Auftragsschweißen von draht- oder pulverförmigem Zusatzwerkstoff regelmäßige und/oder unregelmäßige Strukturen in Art von Versteifungsrippen, dorn- oder ringförmigen Vorsprüngen und/oder inselförmigen Verstärkungen erzeugt werden.

Die lokale Verstärkung des erfindungsgemäßen Metallblechs bzw. eines aus dem Metallblech gefertigten Bauteils kann somit beispielsweise spurförmig, rippenförmig oder flächig ausgebildet sein.

Eine weitere Ausgestaltung des erfindungsgemäßen Metallblechs oder eines daraus gefertigten Bauteils ist dadurch gekennzeichnet, dass die lokale Verstärkung Bereiche unterschiedlicher Höhe und/oder Dicke aufweist. Hierdurch kann das Metallblech bzw. das daraus gefertigte Bauteil besonders fein an verschiedene Belastungen angepasst werden, ohne sein Gewicht übermäßig zu erhöhen.

Eine weitere vorteilhafte Ausgestaltung des erfindungsgemäßen Metallblechs oder eines daraus gefertigten Bauteils ist dadurch gekennzeichnet, dass die lokale Verstärkung mindestens bereichsweise als Hinterschnitt ausgebildet ist. Der Hinterschnitt kann insbesondere an einer oder mehreren rippenförmigen Strukturen ausgebildet sein und beispielsweise zur formschlüssigen Anbindung eines Befestigungselements, einer Verkleidung, eines Kabels oder anderer Funktionsteile genutzt werden.

Als Werkstoff für das erfindungsgemäße Metallblech sind insbesondere Stahl, Aluminium, Magnesium sowie Legierungen auf Basis dieser Metalle geeignet. Als Werkstoff für das additive metallische Auftragsmaterial eignen sich ebenfalls insbesondere Stahl, Aluminium, Magnesium sowie Legierungen auf Basis dieser Metalle. Insbesondere liegt es im Rahmen der vorliegenden Erfindung, das Metallblech und dessen lokale Verstärkung aus gleichen Metallsorten herzustellen. Beispielsweise können identische oder nahezu identische Legierungen für das aufzuschmelzende Pulver bzw. den aufzuschweißen Zusatzwerkstoff einerseits und das Grundblech andererseits verwendet werden.

Ebenfalls liegt es im Rahmen der vorliegenden Erfindung, dass das Metallblech und die lokale Verstärkung aus verschiedenartigen Metallen (Legierungen) bestehen bzw. hergestellt werden. Bei der Verwendung verschiedenartiger Metalle für das additive metallische Auftragsmaterial und das Grundblech, sieht eine weitere Ausgestaltung der Erfindung vor, das Metallblech (Grundblech) vor dem Auftrag des additiven metallischen Auftragsmaterials mit einem Haftvermittler zu beschichten. Zum Beispiel kann ein als Grundblech dienendes Stahlblech mit einer Aluminium-Zink-Beschichtung versehen werden, um ein Pulver aus einer Aluminium-Legierung durch Auftragsschweißen oder selektives Schmelzen zuverlässig mit dem Grundblech verbinden zu können. Eine vorteilhafte Ausgestaltung der vorliegenden Erfindung ist dementsprechend dadurch gekennzeichnet, dass zwischen dem Metallblech und der lokalen Verstärkung ein Haftvermittler angeordnet ist.

Um sowohl einen guten Korrosionsschutz von Stahlblech durch Verzinkung als auch das Auftragsschweißen oder selektive Schmelzen von Metallpulver auf einem Stahlblech zu ermöglichen, wird nach einer optionalen Ausgestaltung der Erfindung unverzinktes Stahlblech als Grundblech verwendet, das erst nach dem Auftragsschweißen oder selektiven Schmelzen des aufgebrachten Metallpulvers verzinkt wird. Eine weitere optionale Ausgestaltung der Erfindung sieht ein lokales Entzinken eines verzinkten Stahlblechs (Grundblechs) vor, wobei gegebenenfalls nach dem Auftragsschweißen oder selektiven Schmelzen des auf den entzinkten Stellen aufgebrachten Metallpulvers eine erneute Verzinkung dieser Stellen einschließlich der dort angeformten Strukturen erfolgt. Das lokale Entzinken des verzinkten Stahlblechs wird beispielsweise chemisch mittels Säure, thermisch (z.B. durch Laserstrahlung) und/oder mechanisch (z.B. durch Schleifen) durchgeführt. Eine weitere optionale Ausgestaltung der Erfindung sieht den Einsatz von Stahlbändern mit partieller Zinkbeschichtung vor, wobei gegebenenfalls nach dem Auftragsschweißen oder selektiven Schmelzen des auf dem unverzinkten Bereich aufgebrachten Metallpulvers eine Verzinkung dieses Bereichs einschließlich der dort angeformten metallischen Strukturen erfolgt.

Die erfindungsgemäße Ergänzung eines Metallblechs (Grundblechs) mit einer lokalen metallischen Verstärkung (Struktur) durch Auftragsschweißen und/oder selektives Schmelzen einer oder mehrerer übereinander aufgetragener Metallpulverschichten ermöglicht nicht nur die Erzeugung von Strukturen mit Hinterschnitt, die formschlüssigen Anbindung verschiedener Aggregate verwendet werden können. Nach einer weiteren vorteilhaften Ausgestaltung der Erfindung bildet die lokale Verstärkung zusammen mit dem Metallblech (Grundblech) mindestens bereichsweise einen im Querschnitt geschlossenen oder offenen Kanal. Der Kanal kann beispielsweise als Kühlkanal oder Wasserablaufkanal an einem Karosserie-Innenblech, insbesondere Türinnenblech dienen.

Eine weitere Ausgestaltung der Erfindung sieht vor, dass die mindestens eine lokale Verstärkung erst erzeugt wird, nachdem das Metallblech in ein dreidimensionales Bauteil umgeformt oder vorgeformt wurde. Hierdurch können die erforderlichen Umformkräfte reduziert bzw. Eigenspannungen in dem umgeformten Bauteil vermindert oder minimiert werden.

Eine weitere vorteilhafte Ausgestaltung der Erfindung ist dadurch gekennzeichnet, dass das Metallblech nach Herstellung seiner lokalen Verstärkung einer Wärmebehandlung, vorzugsweise einer Glühbehandlung unterzogen wird. Hierdurch wird die Umformbarkeit des erfindungsgemäßen Metallblechs verbessert, insbesondere der maximale Umformgrad erhöht. Denn die Duktilität des Grundbleches wird im Bereich der aufgeschweißten lokalen Verstärkung infolge des hohen Wärmeeintrages erheblich verringert. Durch eine kontinuierliche oder diskontinuierliche Glühbehandlung des erfindungsgemäßen Metallblechs kann dessen maximaler Umformgrad gesteigert werden.

Das Umformen des erfindungsgemäßen Metallblechs kann beispielsweise mittels an die Form der aufgebrachten lokalen Verstärkung angepasster Werkzeuge erfolgen, welche die auf das Grundblech aufgetragene additive Struktur negativ abbilden. Eine andere vorteilhafte Ausgestaltung der Erfindung ist dadurch gekennzeichnet, dass zum Umformen des erfindungsgemäßen Metallblechs ein einen gummielastischen Kontaktbereich aufweisendes Umformwerkzeug verwendet wird, dessen gummielastischer Kontaktbereich die lokale Verstärkung des Metallblechs beim Umformen kontaktiert. In diesem Fall muss die gegebenenfalls komplexe Kontur der additiven Struktur (lokalen Verstärkung) in dem Umformwerkzeug nicht nachgebildet werden. Vielmehr ermöglicht diese Ausgestaltung des erfindungsgemäßen Verfahrens, dass mit ein und demselben Umformwerkzeug aufgrund dessen gummielastischer Kontaktbereich erfindungsgemäße Metallbleche, die verschiedene additive Strukturen (Anformungen) aufweisen, gleichartig umgeformt werden können. Der gummielastische Kontaktbereich kann beispielsweise durch ein Kissen aus Elastomer realisiert werden, das auf der Kopffläche eines als Stempel fungierenden Werkzeugteils angeordnet ist.

Nachfolgend wird die Erfindung anhand einer mehrere Ausführungsbeispiele darstellenden Zeichnung näher erläutert. Es zeigen schematisch:
- Fig. 1a bis 1c: Fertigungsschritte in der Herstellung eines erfindungsgemäßen Karosseriebauteils;
- Fig. 2a und 2b: eine Vorrichtung zur Herstellung eines erfindungsgemäßen Metallblechs, in Seitenansicht und Draufsicht;
- Fig. 3a und 3b: eine weitere Vorrichtung zur Herstellung eines erfindungsgemäßen Metallblechs, in Seitenansicht und Draufsicht;
- Fig. 4a bis 4c: eine weitere Vorrichtung zur Herstellung eines erfindungsgemäßen Metallblechs, in einer Vertikalschnittansicht, wobei Fig. 4c das hergestellte Metallblech in Draufsicht zeigt;
- Fig. 5a und 5b: ein weiteres Ausführungsbeispiel eines erfindungsgemäßen Metallblechs, in Draufsicht und in perspektivischer Darstellung nach Umformung in ein dreidimensionales Bauteil;
- Fig. 6a und 6b: ein weiteres Ausführungsbeispiel eines erfindungsgemäßen Metallblechs, in einer vertikalen Querschnittansicht und in Draufsicht;
- Fig. 7a bis 7e: Fertigungsschritte in der Herstellung eines erfindungsgemäßen Fahrzeugbauteils;
- Fig. 8: ein erfindungsgemäßes Karosseriebauteil in perspektivischer Darstellung; und
- Fig. 9a bis 9c: Fertigungsschritte in der Herstellung eines erfindungsgemäßen Metallblechs bzw. Bauteils.

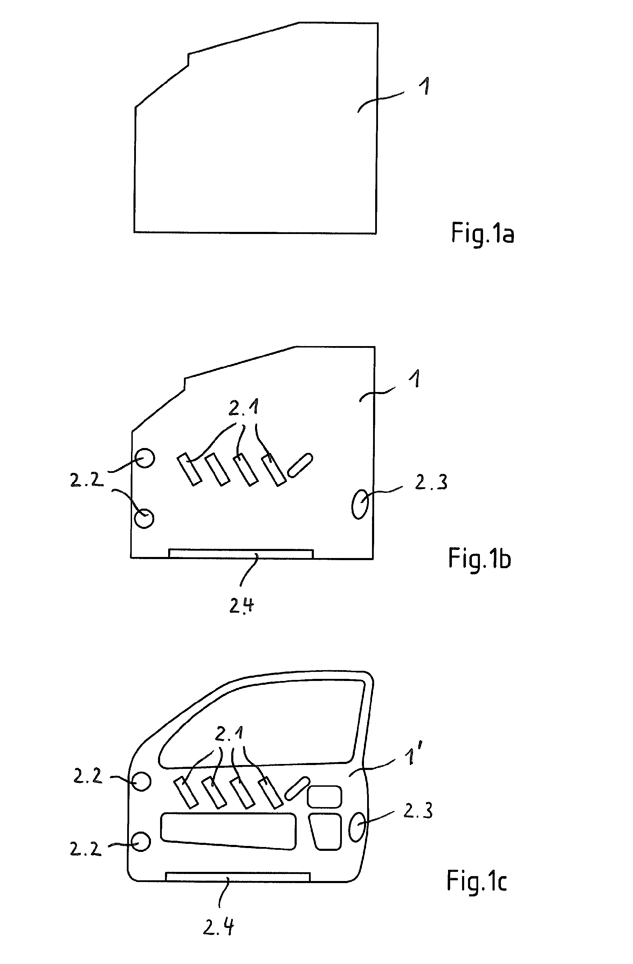

Das Grundprinzip des erfindungsgemäßen Verfahrens zeigen die Figuren 1a bis 1c. Es wird ein Metallblech (Grundblech) 1 bereitgestellt, das eine einheitliche Blechdicke besitzt. Das Metallblech 1 ist beispielsweise aus Stahl-, Aluminium- oder Magnesiumwerkstoff hergestellt. Das Metallblech 1 wird gemäß Fig. 1a als Platine bereitgestellt, deren Rand in Abhängigkeit eines aus dem Metallblech herzustellenden Bauteils, z.B. eines Innenblechs 1' für eine Fahrzeugtür, beschnitten ist.

Die Platine 1 wird anschließend mit einer oder mehreren lokalen Metallanformungen 2.1, 2.2, 2.3, 2.4 versehen, die beispielsweise aus Stahl-, Aluminium- oder Magnesiumwerkstoff hergestellt werden. Das additive Auftragen der lokalen Metallanformungen 2.1, 2.2, 2.3, 2.4 erfolgt durch Auftragsschweißen, vorzugsweise Laserauftragsschweißen, insbesondere Laser-Pulver-Auftragsschweißen, und/oder durch selektives Schmelzen, vorzugsweise selektives Laserschmelzen von schichtweise aufgebrachtem Metallpulver. Das durch selektives Schmelzen aufgebrachte Metallpulver bzw. der durch Auftragsschweißen aufgebrachte Werkstoff geht mit der Platine 1 eine stoffschlüssige Verbindung ein.

Die lokalen additiven Aufträge (Aufdickungen) 2.1, 2.2, 2.3, 2.4 stellen insbesondere lokale Verstärkungen des Grundblechs 1 dar. Sie werden in besonders belasteten Bereichen (2.1) des aus dem Metallblech 1 herzustellenden Bauteils angeordnet, beispielsweise zur Steigerung der Crashstabilität eines Türinnenblechs 1' bei einem Seitenaufprall. Ferner dienen die lokalen additiven Aufträge 2.1, 2.2, 2.3, 2.4 zum Beispiel als Scharnierverstärkung (2.2) und Türschlossverstärkung (2.3). Alternativ oder ergänzend können die lokalen additiven Aufträge noch andere Funktionen übernehmen, zum Beispiel die Funktion einer Randverstärkung (2.4), eines Formschlusselements zur Anbindung einer Verkleidung, einer Lautsprecheraufnahme, eines Wasserablaufkanals, etc.

Die lokalen Aufträge (Verstärkungen) 2.1, 2.2, 2.3, 2.4 sind spurförmig, rippenförmig oder flächig ausgebildet. Die Höhe und/oder Dicke der einzelnen additiven Aufträge 2.1, 2.2, 2.3, 2.4 kann dabei lokal unterschiedlich ausgebildet sein.

Nach dem Aufbringen der lokalen Verstärkungen 2.1, 2.2, 2.3, 2.4 auf das Grundblech 1 wird dieses umgeformt und gegebenenfalls (weiter) beschnitten (vgl. Fig. 1b und 1c).

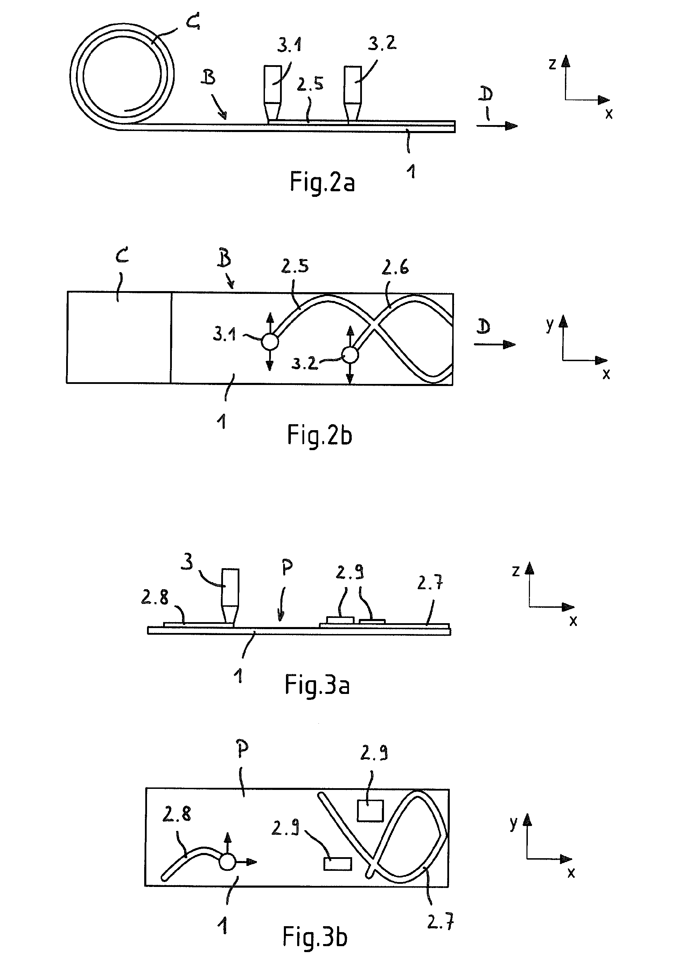

Alternativ kann das Metallblech (Grundblech) 1 auch in Form eines aufgewickelten Bandes B bereitgestellt werden, das in einem kontinuierlichen Prozess durch Auftragsschweißen mit einer oder mehreren lokalen Verstärkungen 2.5, 2.6 versehen wird. Ein solcher Prozess ist in den Fig. 2a und 2b skizziert. Das von einem Coil C abgewickelte Metallband B läuft kontinuierlich in X-Richtung unter einem oder mehreren Laserauftragsschweißköpfen 3.1, 3.2 durch. Die Laserauftragsschweißköpfe 3.1, 3.2 sind jeweils mit einer Zuführeinrichtung (nicht gezeigt) für draht- oder pulverförmigen Zusatzwerkstoff ausgestattet. Die Bandlaufrichtung ist durch den Pfeil D angezeigt. Die Laserauftragsschweißköpfe 3.1, 3.2 sind zumindest quer zur Bandlaufrichtung (X-Richtung) verfahrbar. Darüber hinaus sind die Laserauftragsschweißköpfe 3.1, 3.2 vorzugsweise auch vertikal, bidirektional verfahrbar. Die Vorund Zurückbewegung der Laserauftragsschweißköpfe 3.1, 3.2 in Y-Richtung wird durch eine programmierbare Steuerung (nicht gezeigt) gesteuert. Somit kann beispielsweise eine geschweifte oder sinusförmige Struktur 2.5, 2.6 auf das Metallblech 1 aufgetragen werden (siehe Fig. 2b).

Wenn, wie in den Fig. 2a und 2b gezeigt, mehrere Laserauftragsschweißköpfe 3.1, 3.2 in Bandlaufrichtung hintereinander angeordnet werden, so können diese insbesondere auch, zumindest abschnittsweise, auf dieselbe Spur schweißen. Hierdurch können größere, insbesondere breitere lokale Strukturen (additive Aufträge) 2.5 und/oder lokale Strukturabschnitte mit unterschiedlichen Höhen erzeugt werden.

Mindestens einer der Laserauftragsschweißköpfe 3.1, 3.2 kann auch intermittierend betrieben werden, so dass sich in Bandlaufrichtung eine regelmäßig oder unregelmäßig unterbrochene Materialauftragsspur ergibt.

In den Figuren 3a und 3b ist ein Ausführungsbeispiel der Erfindung skizziert, bei dem Laserauftragsschweißen zur Herstellung eines erfindungsgemäßen Metallblechs diskontinuierlich durchgeführt wird. In diesem Fall wird von einem Metallband eine Platine P abgeschnitten. Die Platine stellt das Grundblech 1 dar. Die Platine P kann gegebenenfalls noch weiter zugeschnitten, insbesondere an ihren Rändern in Abhängigkeit des aus der Platine P herzustellenden Bauteils beschnitten werden. Die Platine P wird unter einen Laserauftragsschweißkopf 3 gelegt, der in X-, Y- sowie Z-Richtung jeweils bidirektional verfahrbar ist. Der Laserauftragsschweißkopf 3 wird programmgesteuert verfahren und zur Erzeugung lokaler additiver Aufträge 2.7, 2.8, 2.9 ebenfalls programmgesteuert diskontinuierlich aktiviert. Auf diese Weise können spurförmige, rippenförmige sowie flächige Verstärkungen 2.7, 2.8, 2.9 auf die Platine P aufgetragen werden.

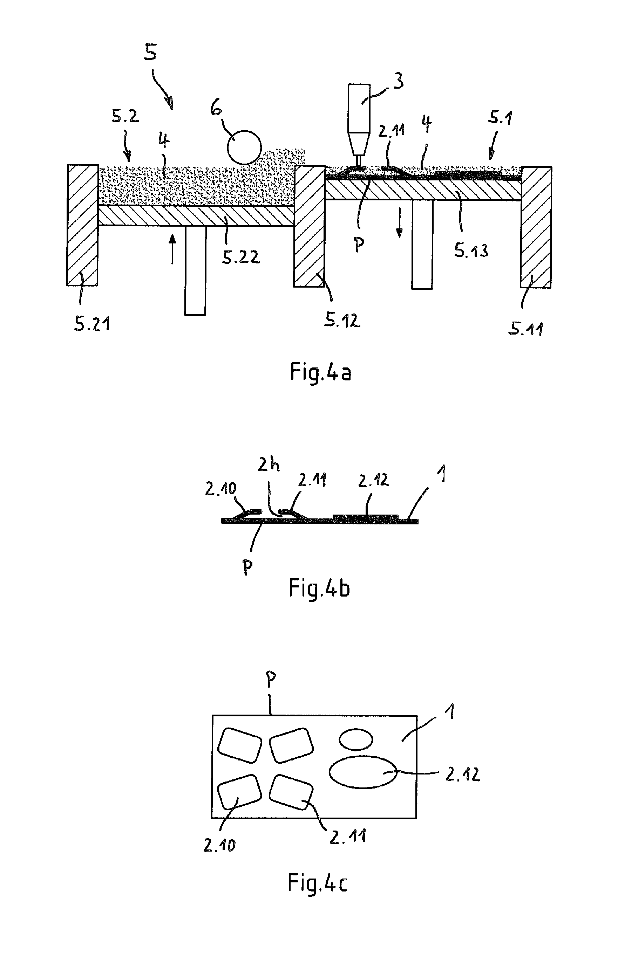

In den Figuren 4a bis 4c ist ein Ausführungsbeispiel der Erfindung skizziert, bei dem lokale additive Aufträge 2.10, 2.11, 2.12 auf einem eine einheitliche Blechdicke aufweisendem Metallblech (Grundblech) 1 durch selektives Laserschmelzen von schichtweise auf das Grundblech 1 aufgebrachtem Metallpulver 4 erzeugt werden.

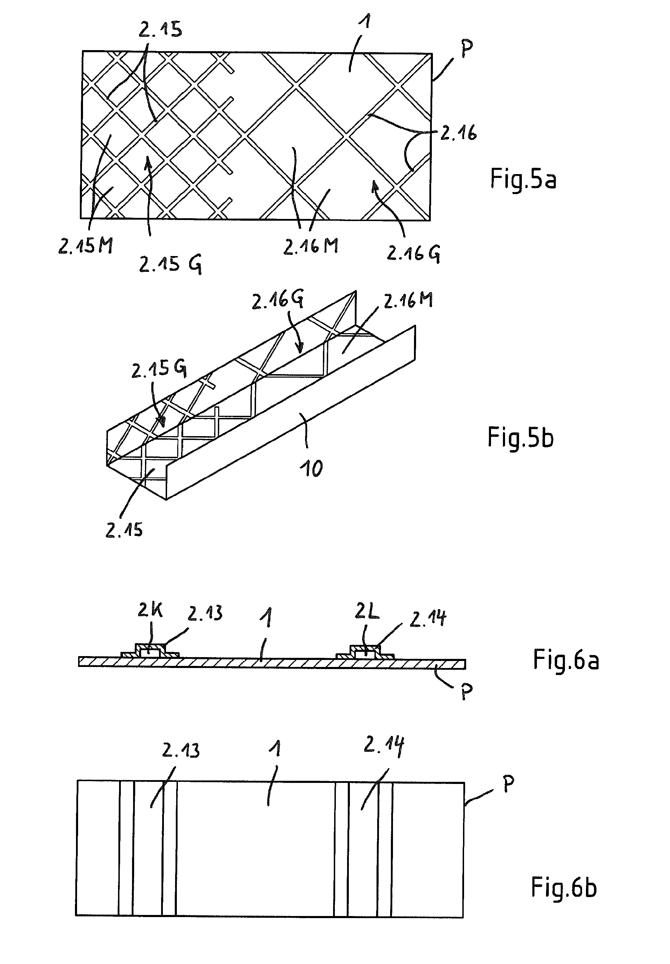

Hierzu wird zunächst von einem Metallband eine Platine P abgeschnitten. Die Platine P kann gegebenenfalls noch weiter zugeschnitten, insbesondere an ihren Rändern in Abhängigkeit des aus der Platine herzustellenden Bauteils beschnitten werden. Die Platine P wird in einen Bauraum 5.1 einer selektiven Laserschmelzvorrichtung 5 eingelegt. Der Bauraum 5.1 ist seitlich durch Wände 5.11, 5.12, die einen geschlossenen Rahmen definieren, begrenzt. Ferner weist der Bauraum 5.1 einen heb- und senkbaren Boden 5.13 auf. Neben dem Bauraum 5.1 ist ein Pulvervorratsraum 5.2 angeordnet. Der Vorratsraum 5.2 ist seitlich durch Wände 5.21 begrenzt, die zusammen mit einer Wand 5.12 des Bauraums 5.1 ebenfalls einen geschlossenen Rahmen definieren. Des Weiteren weist auch der Vorratsraum 5.2 einen heb- und senkbaren Boden 5.22 auf. Über dem Vorratsraum 5.2 ist ein Austragsmittel 6, beispielsweise ein Schieber oder eine Walze angeordnet, mittels dem/der eine vorgebbare Menge an Pulver 4 aus dem Vorratsraum 5.2 in den Bauraum 5.1 auf das dort eingelegte Grundblech 1 (Platine P) aufgebracht werden kann. Auf diese Weise wird eine erste Pulverschicht (ohne Bindung) auf das Grundblech 1 aufgetragen. Anschließend wird die Pulverschicht selektiv mittels mindestens eines in X-, Y- sowie Z-Richtung jeweils bidirektional verfahrbaren Laserstrahlkopfes 3 mit dem Grundblech 1 verschweißt. Danach wird das Grundblech 1 im Bauraum 5.1 durch Absenken des Bodens 5.13 um einen vorgebbaren Betrag abgesenkt. Sodann wird eine neue Pulverschicht aufgetragen, die anschließend selektiv mittels des Laserstrahlkopfes 3 verschweißt wird. Durch das selektive lokale Aufschmelzen der Pulverschichten wird nur der jeweils gewünschte lokale Schichtbereich verfestigt. Überschüssiges Pulver 4 wird abschließend entfernt. Durch das schichtweise Aufbringen der Pulverschichten in Kombination mit dem selektiven Schmelzen (Verfestigen) bestimmter lokaler Schichtbereiche lassen sich insbesondere auch additive Aufträge 2.10, 2.11 mit Hinterschnitt 2h erzeugen, wie dies beispielhaft in Fig. 4a und 4b dargestellt ist. Auch können auf diese Weise additive lokale Aufträge 2.13, 2.24 erzeugt werden, die länglich ausgebildet sind und beispielsweise ein Hutprofil (vgl. Fig. 6a und 6b), umgekehrtes U-Profil oder ringförmiges Querschnittsprofil aufweisen.

Ein erfindungsgemäßes Metallblech bzw. Bauteil, wie es beispielhaft in Fig. 6a und 6b dargestellt ist, das einen oder mehrere additive lokale Aufträge 2.13 2.14 aufweist, die Kanäle 2K oder Leitungen 2L definieren, können beispielsweise als Gehäuseteil mit integrierten Kühlkanälen oder Bauteil mit integrierter Kabelführung verwendet werden.

Der additive lokale Auftrag auf dem Grundblech 1 bzw. der Platine P kann auch insbesondere dergestalt ausgeführt werden, dass sich Bereiche unterschiedlicher Verstärkung (Versteifung) ergeben. Dies ist beispielhaft in den Figuren 5a und 5b dargestellt. Auf einer Platine P sind durch eines der oben beschriebenen additiven Auftragsverfahren Rippen 2.15, 2.16 oder Gitterstrukturen 2.15G, 2.16G angeformt, die unterschiedlich weit voneinander beabstandet sind bzw. unterschiedliche große Gitterräume (Maschen) 2.15M, 2.16M aufweisen. Eine entsprechend ausgebildete Platine P kann vor oder nach dem Anformen der additiven lokalen Aufträge (z.B. Rippen 2.15, 2.16) umgeformt werden, z.B. in ein U-Profil 10, das mit einem Schließblech (nicht gezeigt) verschlossen wird, oder in ein geschlossenes Profil. Solche Profile 10 können als Bauteile, welche im Falle eines Unfalls Aufprall-Energie aufnehmen, eingesetzt werden, insbesondere als axial belastete Bauteile (z.B. als Längsträger oder Crashbox) sowie als lateral belastete Bauteile (z.B. als Stoßstange oder Schweller) eingesetzt werden. Durch die Anformung/Anordnung der Rippen 2.15, 2.16 in unterschiedlichen Abständen voneinander lässt sich in Bezug auf einen Crash für jeden Weg-Bereich der Widerstand bzw. die Energieaufnahme einstellen. So können progressive oder degressive Verformungseigenschaften erreicht werden.

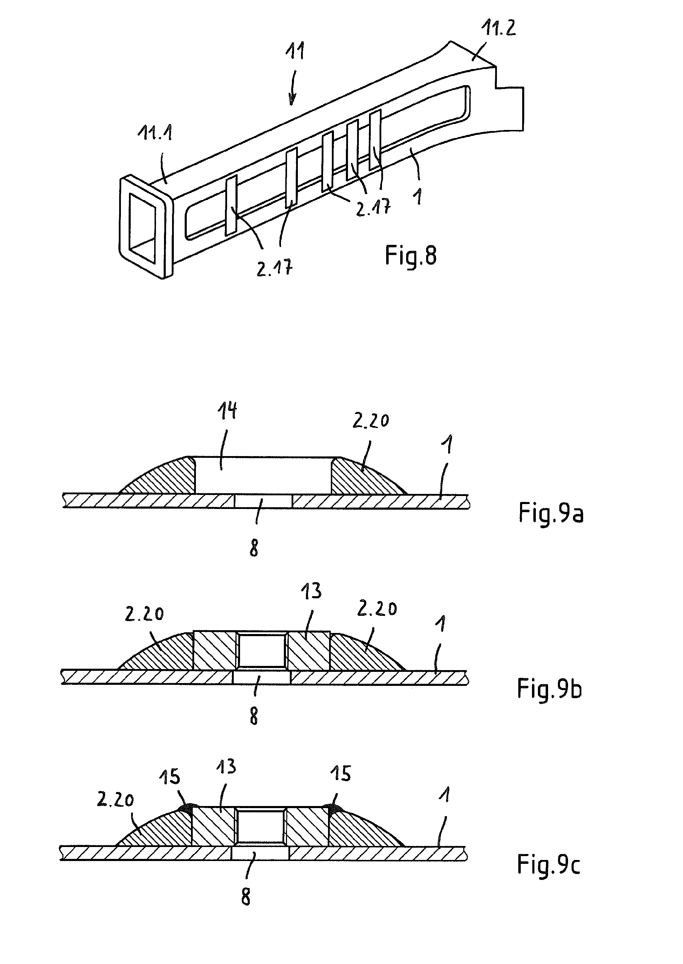

Ein weiteres Beispiel für ein Bauteil, das aus einem erfindungsgemäß mit additiven lokalen Verstärkungen 2.17 versehenen Metallblech 1 hergestellt werden kann, ist in Fig. 8 skizziert. Der dort gezeigte Längsträger 11 einer Fahrzeugkarosserie weist mehrere Versteifungsrippen 2.17 auf, die mittels eines der oben beschriebenen additiven Auftragsverfahren an dem Metallblech 1 bzw. Bauteil 11 angeformt und in unterschiedlichen Abständen voneinander angeordnet sind. Der Abstand der Rippen 2.17 nimmt vom vorderen Ende 11.1 des Längsträgers 11 in Richtung seines hinteren Endes 11.2, das im fertigmontierten Zustand des Längsträgers 11 dem Fahrgastraum (nicht gezeigt) zugewandt ist, ab. Mit anderen Worten nimmt in diesem Anwendungsbeispiel der additive lokale Auftrag entlang des Verformungsweges des Längsträgers 11 zu. Dementsprechend ergibt sich eine Zunahme der Verformungskraft.

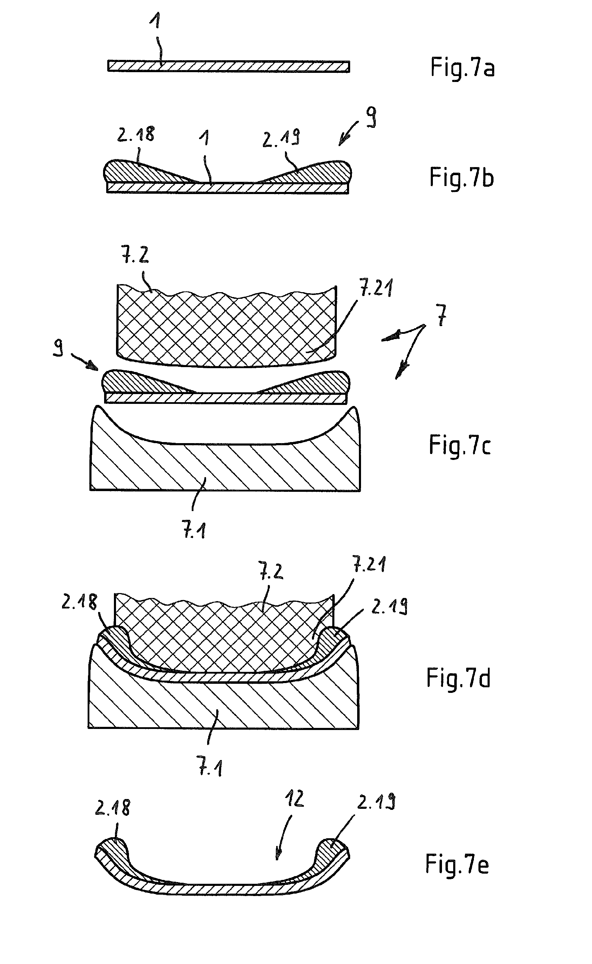

In den Figuren 7a bis 7e ist ein Beispiel für eine individualisierte Massenfertigung eines aus Metallblech 1 hergestellten Bauteils 12 skizziert. Bei dem Bauteil 12 handelt es sich um eine personalisierte Sitzschale (Fig. 7e). Die Fertigung einer solchen Sitzschale beginnt mit der Bereitstellung eines Metallblechs (Grundblechs) 1 in Form einer Platine (Fig. 7a). Auf das Blech 1 werden auf vorgegebene Bereiche, z.B. auf Randbereiche, additive lokale Aufträge 2.18, 2.19 mittels eines der oben beschriebenen additiven Auftragsverfahren angeformt. Anschließend wird das so hergestellte Halbzeug 9 in ein Umformwerkzeug 7 eingelegt (Fig. 7c) und umgeformt (Fig. 7d). Das Umformwerkzeug 7 weist eine Matrize 7.1 und einen Stempel 7.2 mit einem gummielastischen Kontaktbereich 7.21 auf, welcher die additiven lokalen Aufträge 2.18, 2.19 des Metallblechs 1 beim Umformen kontaktiert. Der gummielastische Kontaktbereich 6.21 passt sich an unterschiedlich ausgebildete additive Aufträge an (vgl. Fig. 7c und 7d), so dass sich mit ein und demselben Werkzeugsatz des Umformwerkzeuges 7 unterschiedliche, körperangepasste Sitzschalen 12 (Fig. 7e) herstellen lassen.

Des Weiteren können die additiven lokalen Aufträge auf einem Grundblech 1 auch als Formschlüsse für Fügeelemente genutzt werden, z.B. als Aufnahme einer Mutter. Dies ist beispielhaft in den Fig. 9a bis 9c skizziert. Auf einem Grundblech 1, das mit einem oder mehreren Durchgangslöchern versehen ist, wird um ein Durchgangsloch 8 herum ein additiver lokaler Auftrag 2.20 mittels eines der oben beschriebenen additiven Auftragsverfahren angeformt. Der additive lokale Auftrag 2.20 wird dabei so ausgeführt, dass seine Innenfläche im Wesentlichen komplementär zur Außenkontur einer Mutter 13 ausgebildet ist. Anschließend wird Mutter in die von dem additiven Auftrag 2.20 definierte Aussparung 14 eingesetzt und an dem Auftrag fixiert, beispielsweise durch Schweißpunkte 15. Die Ausführung der vorliegenden Erfindung ist nicht auf die in der Zeichnung dargestellten Ausführungsbeispiele beschränkt. Vielmehr sind zahlreiche Varianten denkbar, die auch bei einer von den gezeigten Beispielen abweichenden Gestaltung von der in den beiliegenden Ansprüchen angegebenen Erfindung Gebrauch machen. Beispielsweise liegt es auch im Rahmen der Erfindung, auf einem Grundblech 1 (Band B oder Platine P) additive lokale Aufträge in Form von Rippen oder Spuren anzuformen, die parallel zueinander und diagonal zur Längsachse des Grundblechs verlaufen. Aus einem derartigen Halbzeug lassen sich beispielsweise durch Rollformen (Rollprofilieren) strömungsoptimierte Rohre, z.B. Auspuffrohre, Katalysatoren oder Mischrohre herstellen.

## Patentansprüche

1. Metallblech (1) mit einer ersten Seite und einer der ersten Seite abgewandten zweiten Seite, wobei mindestens eine der beiden Seiten mit mindestens einer lokalen metallischen Verstärkung versehen ist, **dadurch gekennzeichnet, dass** die lokale Verstärkung (2.1, 2.2, 2.3, 2.4, 2.5, 2.6, 2.7, 2.8, 2.9, 2.10, 2.11, 2.12, 2.13, 2.14, 2.15, 2.16, 2.17, 2.18, 2.19, 2.20) eine durch selektives Schmelzen von auf dem Metallblech (1) aufgebrachtem Metallpulver und/oder durch Auftragsschweißen von draht- oder pulverförmigem Zusatzwerkstoff hergestellte metallische Verstärkung ist, und dass die lokale Verstärkung (2.10, 2.11) mindestens bereichsweise als Hinterschnitt (2h) ausgebildet ist.

2. Metallblech nach Anspruch 1, **dadurch gekennzeichnet, dass** die lokale Verstärkung (2.1, 2.2, 2.3, 2.4, 2.5, 2.6, 2.7, 2.8, 2.9, 2.10, 2.11, 2.12, 2.13, 2.14, 2.15, 2.16, 2.17, 2.18, 2.19, 2.20) spurförmig, rippenförmig oder flächig ausgebildet ist.

3. Metallblech nach Anspruch 1 oder 2, **dadurch gekennzeichnet, dass** die lokale Verstärkung (2.9, 2.10, 2.11, 2.18, 2.19) Bereiche unterschiedlicher Höhe und/oder Dicke aufweist.

4. Metallblech nach einem der Ansprüche 1 bis 3, **dadurch gekennzeichnet, dass** das Metallblech (1) und die lokale Verstärkung (2.1, 2.2, 2.3, 2.4, 2.5, 2.6, 2.7, 2.8, 2.9, 2.10, 2.11, 2.12, 2.13, 2.14, 2.15, 2.16, 2.17, 2.18, 2.19, 2.20) aus gleichen Metallsorten oder aus verschiedenartigen Metallen bestehen.

5. Metallblech nach einem der Ansprüche 1 bis 4, **dadurch gekennzeichnet, dass** die lokale Verstärkung (2.13, 2.14) zusammen mit dem Metallblech (1) mindestens bereichsweise einen im Querschnitt geschlossenen oder offenen Kanal (2K, 2L) bildet.

6. Metallblech nach einem der Ansprüche 1 bis 5, **dadurch gekennzeichnet, dass** die lokale Verstärkung (2.20) als Halterung zur formschlüssigen Aufnahme eines Befestigungselements (13) oder Funktionsteils ausgebildet ist.

7. Verfahren zur Herstellung eines lokal verstärkten Metallblechs (1), welches eine erste Seite und eine der ersten Seite abgewandte zweite Seite besitzt, bei dem mindestens eine der beiden Seiten mit mindestens einer lokalen metallischen Verstärkung versehen wird, **dadurch gekennzeichnet, dass** die Verstärkung (2.1, 2.2, 2.3, 2.4, 2.5, 2.6, 2.7, 2.8, 2.9, 2.10, 2.11, 2.12, 2.13, 2.14, 2.15, 2.16, 2.17, 2.18, 2.19, 2.20) durch selektives Schmelzen von auf dem Metallblech (1) aufgebrachtem Metallpulver und/oder durch Auftragsschweißen von drahtoder pulverförmigem Zusatzwerkstoff hergestellt wird, und dass das selektive Schmelzen von auf dem Metallblech (1) aufgebrachtem Metallpulver und/oder das Auftragsschweißen von draht- oder pulverförmigem Zusatzwerkstoff in der Weise durchgeführt wird, dass die lokale Verstärkung (2.10, 2.11) mindestens bereichsweise als Hinterschnitt (2h) ausgebildet wird.

8. Verfahren nach Anspruch 7, **dadurch gekennzeichnet, dass** die lokale Verstärkung (2.1, 2.2, 2.3, 2.4, 2.5, 2.6, 2.7, 2.8, 2.9, 2.10, 2.11, 2.12, 2.13, 2.14, 2.15, 2.16, 2.17, 2.18, 2.19, 2.20) spurförmig, rippenförmig oder flächig ausgebildet wird.

9. Verfahren nach Anspruch 7 oder 8, **dadurch gekennzeichnet, dass** die lokale Verstärkung durch lokal unterschiedlichen Materialauftrag so ausgebildet wird, dass die Verstärkung (2.9, 2.10, 2.11, 2.18, 2.19) Bereiche unterschiedlicher Höhe und/oder Dicke aufweist.

10. Verfahren nach einem der Ansprüche 7 bis 9, **dadurch gekennzeichnet, dass** das selektive Schmelzen von auf dem Metallblech (1) aufgebrachtem Metallpulver und/oder das Auftragsschweißen von draht- oder pulverförmigem Zusatzwerkstoff in der Weise durchgeführt wird, dass die lokale Verstärkung (2.13, 2.14) zusammen mit dem Metallblech (1) mindestens bereichsweise einen im Querschnitt geschlossenen oder offenen Kanal (2K) bildet.

11. Verfahren nach einem der Ansprüche 7 bis 10, **dadurch gekennzeichnet, dass** zur Herstellung des lokal verstärkten Metallblechs (1) ein Metallband (B) verwendet wird, auf dem im kontinuierlichem Durchlauf die mindestens eine lokale Verstärkung als spur- oder rippenförmige Verstärkung (2.5, 2.6) durch das Auftragsschweißen von draht- oder pulverförmigem Zusatzwerkstoff mittels eines oder mehrerer, zumindest in Querrichtung des Metallbandes (B) verfahrbarer Schweißköpfe (3.1, 3.2) erzeugt wird.

12. Verfahren nach einem der Ansprüche 7 bis 11, **dadurch gekennzeichnet, dass** zur Herstellung des lokal verstärkten Metallblechs (1) eine Metallplatine (P) verwendet wird, auf der die lokale Verstärkung als spur-, rippen- oder flächenförmige Verstärkung (2.7, 2.8, 2.9; 2.10, 2.11, 2.12) durch das Auftragsschweißen von drahtoder pulverförmigem Zusatzwerkstoff und/oder durch selektives Schmelzen von auf der Metallplatine (P) aufgebrachtem Metallpulver mittels eines oder mehrerer verfahrbarer Schweißköpfe (3; 3.1, 3.2) diskontinuierlich erzeugt wird.

13. Verfahren nach einem der Ansprüche 7 bis 12, **dadurch gekennzeichnet, dass** die mindestens eine lokale Verstärkung erst erzeugt wird, nachdem das Metallblech in ein dreidimensionales Bauteil umgeformt oder vorgeformt wurde.

14. Verfahren nach einem der Ansprüche 7 bis 13, **dadurch gekennzeichnet, dass** das Metallblech (1) nach Herstellung seiner lokalen Verstärkung (2.1, 2.2, 2.3, 2.4, 2.5, 2.6, 2.7, 2.8, 2.9, 2.10, 2.11, 2.12, 2.13, 2.14, 2.15, 2.16, 2.17, 2.18, 2.19, 2.20) einer Wärmebehandlung, vorzugsweise einer Glühbehandlung unterzogen wird.

15. Verfahren nach einem der Ansprüche 7 bis 14, **dadurch gekennzeichnet, dass** das Metallblech (1) nach Herstellung seiner lokalen Verstärkung (2.18, 2.19) umgeformt wird, wobei zum Umformen ein einen gummielastischen Kontaktbereich (7.21) aufweisendes Umformwerkzeug (7) verwendet wird, dessen gummielastischer Kontaktbereich (7.21) die lokale Verstärkung (2.18, 2.19) des Metallblechs (1) beim Umformen kontaktiert.
